# EUROPÄISCHE PATENTSCHRIFT

(11) **EP 3 997 355 B1**
(45) Veröffentlichungstag und Bekanntmachung des Hinweises auf die Patenterteilung: **04.09.2024**
(21) Anmeldenummer: 20736567.7
(22) Anmeldetag: 22.06.2020
(51) Int. Cl.: F16D 13/64

(54) **MEHRSCHEIBENKUPPLUNGSSCHEIBE**
MULTIDISC CLUTCH DISC
DISQUE D'EMBRAYAGE À DISQUES MULTIPLES

(30) Priorität: 10.07.2019 DE 102019118720; 28.08.2019 DE 102019123110
(43) Veröffentlichungstag der Anmeldung: 18.05.2022
(73) Patentinhaber: Schaeffler Technologies AG & Co. KG, 91074 Herzogenaurach (DE)
(72) Erfinder: RUSCH, Alain, 67760 Gambsheim (FR); VOIT, Alexander, 76547 Sinzheim (DE)
(86) Internationale Anmeldenummer: PCT/DE2020/100528
(87) Internationale Veröffentlichungsnummer: WO 2021/004576

(56) Entgegenhaltungen:
- DE-A1- 19 928 513
- FR-A1- 2 822 908
- GB-A- 2 055 997
- US-A- 4 913 267
- US-A1- 2012 216 638

## Beschreibung

Die vorliegende Erfindung ist auf eine Mehrscheibenkupplungsscheibe gerichtet. Eine Mehrscheibenkupplungsscheibe wird insbesondere in einer Mehrscheibenkupplung eingesetzt, die zur schaltbaren Übertragung von Drehmomenten in Kraftfahrzeugen Verwendung findet.

Kupplungen für Kraftfahrzeuge weisen zwei stabile Zustände auf, den geschlossenen, eingerückten Zustand und den geöffneten, ausgerückten Zustand. Im geschlossenen Zustand der Kupplung kann ein von einer Antriebseinheit (z. B. einem Verbrennungsmotor) bereitgestelltes Drehmoment über die Kupplung auf eine Abtriebswelle bzw. Getriebeeingangswelle weitergeleitet werden. Im geöffneten Zustand der Kupplung findet eine Übertragung des Drehmoments nicht statt. Eine Kupplung umfasst zumindest eine Gegenplatte, eine gegenüber der Gegenplatte entlang einer axialen Richtung verlagerbare Anpressplatte und eine zwischen der Gegenplatte und der Anpressplatte klemmbare Kupplungsscheibe. Durch Verlagerung der Anpressplatte kann die Kupplung zwischen den beiden Zuständen hin- und hergeschaltet werden.

Dabei sind auch Mehrscheibenkupplungen bekannt, die insbesondere dann zum Einsatz kommen, wenn ein Bauraum in einer radialen Richtung begrenzt ist, wie zum Bespiel bei der Anordnung der Kupplung in einem Rotor einer elektrischen Traktionsmaschine. Das zu übertragende Drehmoment wird dann über mehrere Kupplungsscheiben übertragen, wobei zum schaltbaren Klemmen der Kupplungsscheiben zusätzliche Zwischenplatten (zwischen Gegenplatte und Anpressscheibe) vorgesehen sind.

In einer Mehrscheibenkupplung weist jede Kupplungsscheibe z. B. zwei Beläge, Federsegmente sowie einen Flansch auf. Die Beläge sind zum Klemmen zwischen der Gegenplatte, Anpressplatte und Zwischenplatte vorgesehen. Die Beläge sind über die Federsegmente mit dem Flansch verbunden. Jeder Flansch ist mit der einen Nabe verbunden. Die eine Kupplungsscheibe ist über einer Verstemmung fest mit der Nabe verbunden, die andere Kupplungsscheibe ist axial verschiebbar und über eine Verzahnung drehfest gegenüber der Nabe an der Nabe angeordnet. Die Nabe kann axial verschiebbar auf der Getriebeeingangswelle montiert sein.

Aus der DE 10 2005 047 879 A1 ist bekannt, die Belagfederungen der beiden Scheiben so auszubilden, dass während eines Schließvorgangs der Kupplung die resultierende Bewegung der Flansche minimal ist. Dadurch sollen die axialen Reaktionskräfte der Kupplungsscheiben minimal bleiben.

Während des Schließvorgangs der Kupplung wird das Drehmoment progressiv aufgebaut. Die Zwischenverzahnungen zwischen Nabe und der einen Kupplungsscheibe blockieren sofort, sobald ein Drehmoment vorliegt, so dass keine Axialverschiebung an dieser Stelle mehr möglich ist. Da die Anpressplatte und die Zwischenpressplatte deutlich mehr axialen Weg als die Belagfederung machen (Weg = Federung + Freigangsspalt), sind die Belagfederungen nicht in der Lage die axiale Verschiebung der Flansche zu vermeiden. Da die Verzahnungsverbindungen zwischen Nabe und Kupplungsscheibe blockieren, entstehen hohe Axialkräfte in der Kupplungsscheibe. Die Axialkräfte führen zu hohen Verlusten an effektiver Anpresskraft, was zu einer Reduzierung des übertragbaren Drehmoments führt. Da die Reaktionskräfte in Abhängigkeit des Reibungskoeffizienten der Verzahnungen zwischen Nabe und Kupplungsscheibe stark streuen, ist die Steuerung des Schließvorgangs besonders schwierig.

Ferner ist aus der GB 2 055 3997 A eine Mehrscheibenkupplungsscheibe bekannt, die auf den Oberbegriff des Anspruchs 1 lesbar ist.

Aufgabe der vorliegenden Erfindung ist es, die mit Bezug auf den Stand der Technik angeführten Probleme zumindest teilweise zu lösen. Insbesondere soll eine Mehrscheibenkupplungsscheibe vorgeschlagen werden, die eine möglichst geringe Verschiebekraft im Betrieb hervorruft.

Zur Lösung dieser Aufgaben trägt eine Mehrscheibenkupplungsscheibe mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Es wird eine Mehrscheibenkupplungsscheibe für eine Mehrscheibenkupplung vorgeschlagen. Die Mehrscheibenkupplungsscheibe umfasst zumindest eine Nabe sowie eine erste Scheibe zur Anordnung von Reibbelägen und eine zweite Scheibe zur Anordnung von Reibbelägen. Die Reibbeläge der unterschiedlichen Scheiben sind entlang einer axialen Richtung voneinander beabstandet angeordnet. Die erste Scheibe ist über ein erstes Blech und die zweite Scheibe über ein zweites Blech mit der Nabe verbunden, wobei die Bleche jeweils eine Materialstärke von weniger als 0,9 Millimeter, insbesondere von weniger als 0,8 Millimeter, bevorzugt von weniger als 0,7 Millimeter aufweisen. Die Bleche weisen insbesondere jeweils eine Materialstärke von mindestens 0,3 Millimeter, bevorzugt von mindestens 0,5 Millimeter auf.

Die Mehrscheibenkupplungsscheibe wird insbesondere in einer Mehrscheibenkupplung eingesetzt. Eine Mehrscheibenkupplung umfasst zumindest eine Gegenplatte, eine gegenüber der Gegenplatte entlang einer axialen Richtung verlagerbare Anpressplatte und eine zwischen der Gegenplatte und der Anpressplatte angeordnete Zwischenplatte. Zwischen Gegenplatte und Zwischenplatte ist eine erste Scheibe mit Reibbelägen und zwischen Zwischenplatte und Anpressplatte eine zweite Scheibe mit Reibbelägen angeordnet. Durch Verlagerung der Anpressplatte kann die Kupplung zwischen einem geschlossenen, eingerückten Zustand und einem geöffneten, ausgerückten Zustand hin- und hergeschaltet werden.

Im geschlossenen Zustand der Mehrscheibenkupplung kann ein von einer Antriebseinheit (z. B. einem Verbrennungsmotor) bereitgestelltes Drehmoment über die Mehrscheibenkupplung, das heißt von Gegenplatte, Zwischenplatte und Anpressplatte über die Mehrscheibenkupplungsscheibe, auf eine Abtriebswelle bzw. Getriebeeingangswelle weitergeleitet werden. Im geöffneten Zustand der Kupplung findet eine Übertragung des Drehmoments nicht statt.

Die Nabe ist mit der Getriebeeingangswelle (bzw. Abtriebswelle) drehfest verbunden.

Jede Scheibe mit Reibbelägen ist insbesondere sowohl gegenüber einer Umfangsrichtung als auch gegenüber einer axialen Richtung spielfrei über jeweils ein Blech direkt mit der Nabe verbunden. Die Bleche sind insbesondere elastisch verformbar gegenüber der axialen Richtung, so dass eine Verschiebung der Bleche entlang der axialen Richtung, z. B. zum Ausgleich der Bewegung der Zwischenplatte, nicht erforderlich ist. Die Scheiben, die an voneinander unabhängigen Blechen befestigt sind, sind insbesondere unabhängig voneinander entlang der axialen Richtung verschiebbar. Die Scheiben entwickeln bei Beaufschlagung mit einem Drehmoment nur eine geringe Reaktionskraft. Die über die Bleche realisierte, in der axialen Richtung elastische Verbindung der Scheiben zur Nabe verbessert die Steuerbarkeit der Mehrscheibenkupplung, da die auftretenden Kräfte besser vorhersehbar sind.

Insbesondere sind die Bleche jeweils axialfest, d. h. gegenüber der axialen Richtung fixiert, an der Nabe angeordnet. Insbesondere ist jedes Blech über erste Niete an der Nabe angebunden. Insbesondere sind beide Bleche über gemeinsame Nietverbindungen an der Nabe angebunden. Die Bleche können auch über andere Verbindungsmittel mit der Nabe verbunden sein (z. B. über Schrauben, Schweißverbindung, etc.). Weiter können die Bleche über eine Verzahnung mit der Nabe verbunden sein.

Insbesondere weisen die Scheiben ausgehend von einer Ausgangsstellung nur in einer axialen Richtung eine elastische Verschiebbarkeit auf, wobei die erste Scheibe weiter in der axialen Richtung verschiebbar ist als die zweite Scheibe. Die elastische Verschiebbarkeit wird insbesondere ausschließlich über die elastische Verformbarkeit der Bleche realisiert. Die Scheiben sind insbesondere steif ausgeführt.

Jede Scheibe kann insbesondere eine Belagfederung für die an der Scheibe angeordneten Reibbeläge aufweisen, so dass ein Abstand der Reibbeläge einer Scheibe zueinander veränderbar ist.

Insbesondere sind die Bleche im Wesentlichen eben ausgeführt. Insbesondere sind die Bleche nicht getopft ausgeführt. Insbesondere können die Bleche entlang der Umfangsrichtung eine Wellung, z. B. einen blattfederartigen Federbereich aufweisen, so dass eine bessere Presskraftverteilung realisiert ist. Insbesondere ist zumindest ein Blech, bevorzugt sind alle Bleche, an einer äußeren Umfangsfläche segmentiert ausgeführt, weist/ weisen also entlang der Umfangsrichtung voneinander unabhängig verformbare Bereiche auf.

Insbesondere ist eine der Scheiben über einen topfförmigen Abschnitt mit dem Blech verbunden. Insbesondere ist der topfförmige Abschnitt einteilig mit der Scheibe ausgeführt. Alternativ ist der topfförmige Abschnitt als ein separates Bauteil ausgeführt, über das die Scheibe an das Blech angebunden ist. Der topfförmige Abschnitt ist zumindest teilweise zylindrisch oder kegelförmig, insbesondere konzentrisch zu einer Drehachse der Mehrscheibenkupplung bzw. der Mehrscheibenkupplungsscheibe ausgebildet, so dass durch den topfförmigen Abschnitt zumindest eine axiale Strecke überbrückt wird.

Insbesondere ist zumindest eine Scheibe über zweite Niete mit dem Blech verbunden. Die Scheiben können auch über andere Verbindungsmittel mit dem jeweiligen Blech verbunden sein (z. B. über Schrauben, Schweißverbindung, etc.).

Insbesondere bildet ein Blech auch die Scheibe, d. h. die Reibbeläge sind direkt auf dem Blech angeordnet. Insbesondere ist das zweite Blech derartig ausgeführt.

Insbesondere weist der topfförmige Abschnitt Aussparungen auf, in die sich das mit der anderen Scheibe verbundene Blech im Betrieb der Mehrscheibenkupplung bzw. der Mehrscheibenkupplungsscheibe hinein erstrecken kann, so dass das Blech mit dem Abschnitt eine Überdeckung gegenüber der axialen Richtung bildet.

An der Nabe ist ein Anschlagelement angeordnet, an dem sich zumindest die Bleche gegenüber der axialen Richtung abstützen. Das Anschlagelement ist insbesondere scheibenförmig bzw. ringförmig ausgeführt. Das Anschlagelement erstreckt sich entlang einer radialen Richtung zumindest über die ersten Niete hinaus nach außen. Insbesondere erstreckt sich das Anschlagelement in der radialen Richtung auch über die zweiten Niete nach außen.

Das Anschlagelement weist insbesondere eine Materialstärke von mindestens 1,4 Millimetern auf, bevorzugt von mindestens 1,6 Millimetern. Insbesondere weist das Anschlagelement eine Materialstärke von höchstens 2,5 Millimetern, insbesondere von höchstens 2,0 Millimetern auf.

Insbesondere ist das Anschlagelement mit einer Vorspannung montiert, so dass die Bleche gegenüber der axialen Richtung vorgespannt sind.

Insbesondere weisen die Bleche blattfederartige Federbereiche auf, die gegenüber der axialen Richtung elastisch verformbar sind, so dass eine Verteilung einer Presskraft über eine Umfangsrichtung realisiert ist.

Insbesondere ist ein über die Scheiben übertragbares Drehmoment vollständig durch die Bleche übertragbar. Im Betrieb der Mehrscheibenkupplung bzw. der Mehrscheibenkupplungsscheibe kann ein Drehmoment zwischen der Antriebswelle und der Abtriebswelle über die Reibbeläge der Scheiben und über die Bleche jeweils vollständig übertragen werden. Dabei treten die in Kraftfahrzeugen üblichen Drehmoment auf, d. h. bis höchstens ca. 1.000 Newtonmeter, insbesondere höchstens 500 Newtonmeter, bevorzugt bis höchstens 250 Newtonmeter. Insbesondere werden Drehmomente größer 50 Newtonmeter, bevorzugt größer 100 Newtonmeter übertragen.

Es wird weiter eine Antriebsanordnung vorgeschlagen, zumindest umfassend eine Antriebseinheit und ein Getriebe mit einer Getriebeeingangswelle sowie die beschriebene Mehrscheibenkupplungsscheibe, die zur Übertragung eines Antriebsdrehmoment der Antriebseinheit über die Mehrscheibenkupplung bzw. Mehrscheibenkupplungsscheibe die Getriebeeingangswelle geeignet ausgeführt ist.

Es wird weiter ein Kraftfahrzeug vorgeschlagen, zumindest umfassend die beschriebene Antriebsanordnung mit mindestens einem Rad und einer Antriebseinheit, die ein Antriebsdrehmoment zum Antrieb des Kraftfahrzeuges bereitstellt. Die Antriebseinheit ist insbesondere eine elektrische Maschine. Über die Antriebsanordnung wird ein Antriebsdrehmoment über die Mehrscheibenkupplungsscheibe bzw. die Mehrscheibenkupplung auf das Getriebe und auf das mindestens eine Rad des Kraftfahrzeuges übertragen.

Die Ausführungen zur Mehrscheibenkupplungsscheibe gelten insbesondere gleichermaßen für die Antriebsanordnung und das Kraftfahrzeug und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine bekannte Mehrscheibenkupplung in einer Seitenansicht im Schnitt;
- Fig. 2:: eine Mehrscheibenkupplungsscheibe in perspektivischer Ansicht, in einer Explosionsdarstellung;
- Fig. 3:: die Mehrscheibenkupplungsscheibe nach Fig. 2 in einer Seitenansicht im Schnitt;
- Fig. 4:: die Mehrscheibenkupplungsscheibe nach Fig. 2 und 3 in drei verschiedenen Ansichten, teilweise im Schnitt;
- Fig. 5:: einen Ausschnitt der Mehrscheibenkupplungsscheibe nach Fig. 4 in einer Seitenansicht im Schnitt; und
- Fig. 6:: einen weiteren Ausschnitt der Mehrscheibenkupplungsscheibe nach Fig. 4 in einer Seitenansicht im Schnitt.

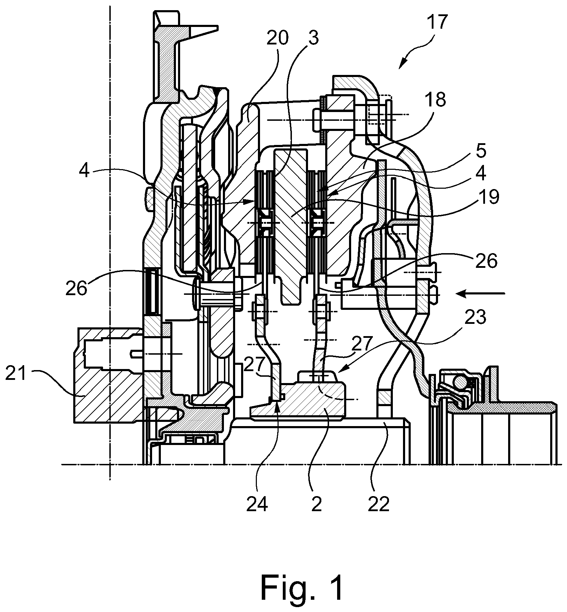

Die Fig. 1 zeigt eine bekannte Mehrscheibenkupplung 17 in einer Seitenansicht im Schnitt. Die Mehrscheibenkupplung 17 umfasst eine Gegenplatte 20, eine gegenüber der Gegenplatte 20 entlang einer axialen Richtung 6 verlagerbare Anpressplatte 18 und eine zwischen der Gegenplatte 20 und der Anpressplatte 18 angeordnete Zwischenplatte 19. Zwischen Gegenplatte 20 und Zwischenplatte 19 ist eine erste (Kupplungs-)Scheibe 3 mit Reibbelägen 4 und zwischen Zwischenplatte 19 und Anpressplatte 18 eine zweite (Kupplungs-)Scheibe 5 mit Reibbelägen 4 angeordnet. Durch Verlagerung der Anpressplatte 18 kann die Mehrscheibenkupplung 17 zwischen einem geschlossenen, eingerückten Zustand und einem geöffneten, ausgerückten Zustand hin- und hergeschaltet werden.

Jede Kupplungsscheibe 3, 5 weist zwei Reibbeläge 4, Federsegmente 26 sowie einen Flansch 27 auf. Die Reibbeläge 4 sind zum Klemmen zwischen der Gegenplatte 20, Anpressplatte 18 und Zwischenplatte 19 vorgesehen. Die Reibbeläge 4 sind über die Federsegmente 26 mit dem Flansch 27 verbunden. Jeder Flansch 27 ist mit der einen Nabe 2 verbunden. Die eine Kupplungsscheibe 3 ist über einer Verstemmung 24 fest mit der Nabe 2 verbunden, die andere Kupplungsscheibe 6 ist axial verschiebbar und über eine Verzahnung 23 drehfest gegenüber der Nabe 2 an der Nabe 2 angeordnet. Die Nabe 2 ist axial verschiebbar auf der Getriebeeingangswelle 22 montiert. Über die Mehrscheibenkupplung 17 wird ein Drehmoment von der Antriebswelle 21 auf die Getriebeeingangswelle 22 übertragen.

Während des Schließvorgangs der Mehrscheibenkupplung 17 wird das Drehmoment progressiv aufgebaut. Die Verzahnungen 23 zwischen Nabe 2 und der einen Kupplungsscheibe 5 blockieren sofort, sobald ein Drehmoment vorliegt, so dass keine Axialverschiebung an dieser Stelle mehr möglich ist. Da die Anpressplatte 18 und die Zwischenpressplatte 19 deutlich mehr axialen Weg als die Belagfederung machen (Weg = Federung + Freigangsspalt), sind die Belagfederungen nicht in der Lage die axiale Verschiebung der Flansche 27 zu vermeiden. Da die Verzahnungsverbindungen zwischen Nabe 2 und Kupplungsscheibe 5 blockieren, entstehen hohe Axialkräfte in der Kupplungsscheibe 5. Die Axialkräfte führen zu hohen Verlusten an effektiver Anpresskraft, was zu einer Reduzierung des übertragbaren Drehmoments führt. Da die Reaktionskräfte in Abhängigkeit des Reibungskoeffizienten der Verzahnungen 23 zwischen Nabe 2 und Kupplungsscheibe 3, 5 stark streuen, ist die Steuerung des Schließvorgangs besonders schwierig.

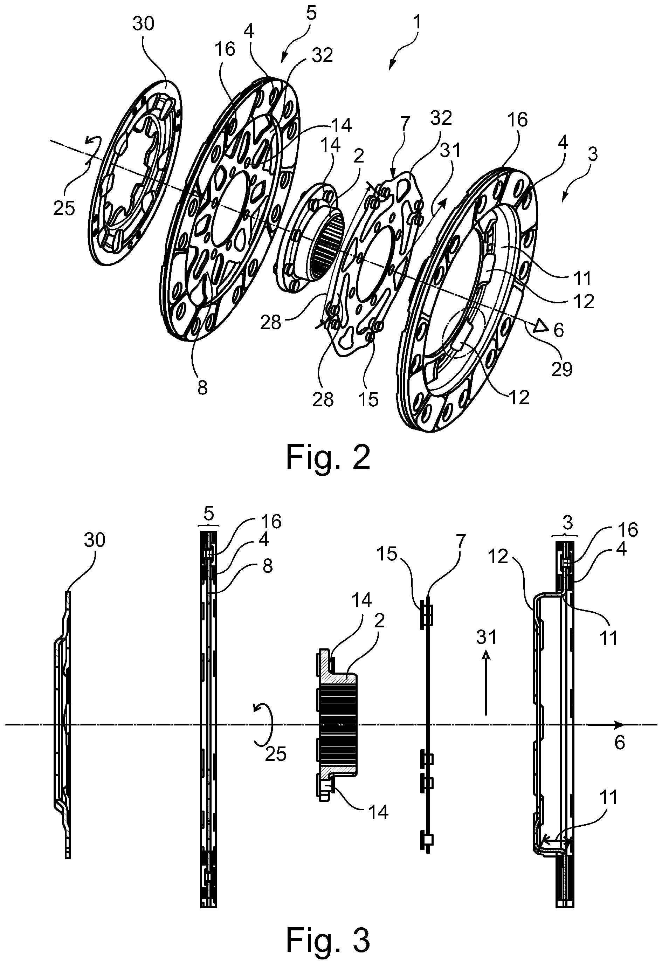

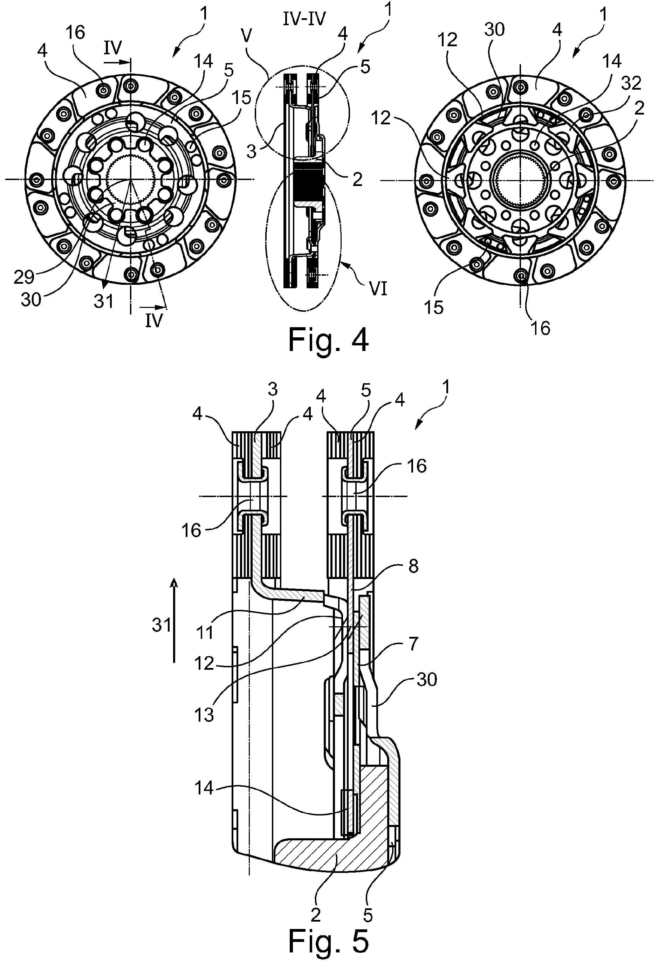

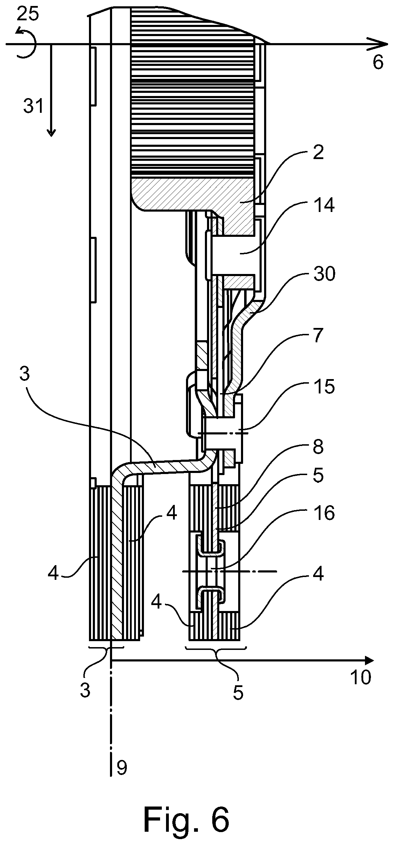

Fig. 2 zeigt eine Mehrscheibenkupplungsscheibe 1 in perspektivischer Ansicht, in einer Explosionsdarstellung. Fig. 3 zeigt die Mehrscheibenkupplungsscheibe 1 nach Fig. 2 in einer Seitenansicht im Schnitt. Fig. 4 zeigt die Mehrscheibenkupplungsscheibe 1 nach Fig. 2 und 3 in drei verschiedenen Ansichten, teilweise im Schnitt. Der Schnittverlauf IV-IV der mittleren Darstellung ist in der linken Ansicht dargestellt. Fig. 5 zeigt einen Ausschnitt V der Mehrscheibenkupplungsscheibe 1 nach Fig. 4 in einer Seitenansicht im Schnitt. Fig. 6 zeigt einen weiteren Ausschnitt VI der Mehrscheibenkupplungsscheibe 1 nach Fig. 4 in einer Seitenansicht im Schnitt. Die Fig. 2 bis 6 werden im Folgenden gemeinsam beschrieben. Auf die Ausführungen zu der Fig. 1 wird Bezug genommen.

Die Mehrscheibenkupplungsscheibe 1 umfasst eine Nabe 2 sowie eine erste Scheibe 3 mit Reibbelägen 4 und eine zweite Scheibe 5 mit Reibbelägen 4. Die Reibbeläge 4 der unterschiedlichen Scheiben 3, 5 sind entlang einer axialen Richtung 6 voneinander beabstandet angeordnet. Die erste Scheibe 3 ist über ein erstes Blech 7 und die zweite Scheibe 5 über ein zweites Blech 8 mit der Nabe 2 verbunden, wobei die Bleche 7, 8 jeweils eine nur geringe Materialstärke aufweisen. Das zweite Blech 8 bildet direkt die zweite Scheibe 5, das heißt, dass die Reibbeläge 4 direkt auf dem zweiten Blech 8 angeordnet sind.

Die Mehrscheibenkupplungsscheibe 1 wird in einer Mehrscheibenkupplung 17 eingesetzt, z. B. gemäß Fig. 1. Eine Mehrscheibenkupplung umfasst eine Gegenplatte 20, eine gegenüber der Gegenplatte 20 entlang einer axialen Richtung 6 verlagerbare Anpressplatte 18 und eine zwischen der Gegenplatte 20 und der Anpressplatte 18 angeordnete Zwischenplatte 19. Zwischen Gegenplatte 20 und Zwischenplatte 19 ist eine erste Scheibe 3 mit Reibbelägen 4 und zwischen Zwischenplatte 19 und Anpressplatte 18 eine zweite Scheibe 5 mit Reibbelägen 4 angeordnet. Durch Verlagerung der Anpressplatte 18 kann die Mehrscheibenkupplung 17 zwischen einem geschlossenen, eingerückten Zustand und einem geöffneten, ausgerückten Zustand hin- und hergeschaltet werden.

Die Nabe 2 ist mit der Getriebeeingangswelle 22 (bzw. Abtriebswelle 22) drehfest verbunden.

Jede Scheibe 3, 5 mit Reibbelägen 4 ist sowohl gegenüber einer Umfangsrichtung 25 als auch gegenüber einer axialen Richtung 6 spielfrei über jeweils ein Blech 7, 8 direkt mit der Nabe 2 verbunden. Die Bleche 7, 8 sind elastisch verformbar gegenüber der axialen Richtung 6, so dass eine Verschiebung der Bleche 7, 8 entlang der axialen Richtung 6, z. B. zum Ausgleich der Bewegung der Zwischenplatte 19, nicht erforderlich ist. Die Scheiben 3, 5, die an voneinander unabhängigen Blechen 7, 8 befestigt sind, sind unabhängig voneinander entlang der axialen Richtung 6 verschiebbar. Die Scheiben 3, 5 entwickeln bei Beaufschlagung mit einem Drehmoment nur eine geringe Reaktionskraft. Die über die Bleche 7, 8 realisierte, in der axialen Richtung 6 elastische Verbindung der Scheiben 3, 5 zur Nabe 2 verbessert die Steuerbarkeit der Mehrscheibenkupplung 17, da die auftretenden Kräfte besser vorhersehbar sind.

Die Bleche 7, 8 sind jeweils axialfest, d. h. gegenüber der axialen Richtung 6 fixiert, an der Nabe 2 angeordnet. Jedes Blech 7, 8 ist über erste Niete 14 an der Nabe 2 angebunden. Beide Bleche 7, 8 sind über gemeinsame Nietverbindungen, also erste Niete 14, an der Nabe 2 angebunden.

Die Scheiben 3, 5 weisen ausgehend von einer Ausgangsstellung 9 nur in einer axialen Richtung 6 eine elastische Verschiebbarkeit 10 (siehe Fig. 6) auf, wobei die erste Scheibe 3 weiter in der axialen Richtung 6 verschiebbar ist als die zweite Scheibe 5. Die elastische Verschiebbarkeit 10 wird ausschließlich über die elastische Verformbarkeit der Bleche 7, 8 realisiert. Die erste Scheibe 3 ist im Bereich der Reibbeläge 4 und im Bereich des Abschnitts 11 steif ausgeführt. Die zweite Scheibe 5 bzw. das zweite Blech 8 ist im Bereich der Reibbeläge 4 steif ausgeführt.

Die Bleche 7, 8 sind im Wesentlichen eben ausgeführt. Die Bleche 7, 8 sind nicht getopft ausgeführt. Zumindest das erste Blech 7 ist an einer äußeren Umfangsfläche segmentiert ausgeführt, weist also entlang der Umfangsrichtung 25 voneinander unabhängig verformbare Bereiche 28 auf.

Die erste Scheibe 3 ist über einen topfförmigen Abschnitt 11 mit dem ersten Blech 7 verbunden. Der topfförmige Abschnitt 11 ist einteilig mit der ersten Scheibe 3 ausgeführt. Der topfförmige Abschnitt 11 ist zumindest teilweise zylindrisch und dabei konzentrisch zu einer Drehachse 29 der Mehrscheibenkupplung 17 bzw. der Mehrscheibenkupplungsscheibe 1 ausgebildet, so dass durch den topfförmigen Abschnitt 11 zumindest eine axiale Strecke überbrückt wird.

Die erste Scheibe 3 ist über zweite Niete 15 mit dem ersten Blech 7 verbunden. Die Reibbeläge 4 sind über dritte Niete 16 an den Scheiben 3, 5 befestigt bzw. im Fall der zweiten Scheibe 5 direkt am zweiten Blech 8.

Der topfförmige Abschnitt 11 weist Aussparungen 12 auf, in die sich das mit der zweiten Scheibe 5 verbundene zweite Blech 8 im Betrieb der Mehrscheibenkupplung 17 bzw. der Mehrscheibenkupplungsscheibe 1 hinein erstrecken kann, so dass das Blech 8 mit dem Abschnitt 11 eine Überdeckung 13 gegenüber der axialen Richtung 6 bildet.

An der Nabe 2 ist ein Anschlagelement 30 angeordnet, an dem sich die Bleche 7, 8 gegenüber der axialen Richtung 6 abstützen. Das Anschlagelement 30 ist scheibenförmig bzw. ringförmig ausgeführt. Das Anschlagelement 30 erstreckt sich entlang einer radialen Richtung 31 über die ersten Niete 14 und auch über die zweiten Niete 15 hinaus nach außen. Das Anschlagelement 30 ist über zweite Niete 15 mit dem ersten Blech 7 und mit der ersten Scheibe 3 verbunden.

Das Anschlagelement 30 weist eine größere Materialstärke als die Bleche 7, 8 auf. Das Anschlagelement 30 ist mit einer Vorspannung montiert, so dass die Bleche 7, 8 gegenüber der axialen Richtung 6 vorgespannt sind.

Die Bleche 7, 8 weisen blattfederartige Federbereiche 32 auf, die gegenüber der axialen Richtung 6 elastisch verformbar sind, so dass eine Verteilung einer Presskraft über eine Umfangsrichtung 25 realisiert ist.

Ein über die Scheiben 3, 5 übertragbares Drehmoment ist vollständig durch die Bleche 7, 8 übertragbar. Im Betrieb der Mehrscheibenkupplung 17 bzw. der Mehrscheibenkupplungsscheibe 1 kann ein Drehmoment zwischen der Antriebswelle 21 und der Abtriebswelle bzw. Getriebeeingangswelle 22 über die Reibbeläge 4 der Scheiben 3, 5 und über die Bleche 7, 8 jeweils vollständig übertragen werden.

### Bezugszeichenliste

- 1: Mehrscheibenkupplungsscheibe
- 2: Nabe
- 3: erste Scheibe
- 4: Reibbelag
- 5: zweite Scheibe
- 6: axiale Richtung
- 7: erstes Blech
- 8: zweites Blech
- 9: Ausgangsstellung
- 10: Verschiebbarkeit
- 11: Abschnitt
- 12: Aussparung
- 13: Überdeckung
- 14: erster Niet
- 15: zweiter Niet
- 16: dritter Niet
- 17: Mehrscheibenkupplung
- 18: Anpressplatte
- 19: Zwischenplatte
- 20: Gegenplatte
- 21: Antriebswelle
- 22: Getriebeeingangswelle
- 23: Verzahnung
- 24: Verstemmung
- 25: Umfangsrichtung
- 26: Federsegment
- 27: Flansch
- 28: Bereich
- 29: Drehachse
- 30: Anschlagelement
- 31: Radiale Richtung
- 32: Federbereich

## Patentansprüche

1. Mehrscheibenkupplungsscheibe (1), zumindest umfassend eine Nabe (2) sowie eine erste Scheibe (3) zur Anordnung von Reibbelägen (4) und eine zweite Scheibe (5) zur Anordnung von Reibbelägen (4), wobei die Reibbeläge (4) der unterschiedlichen Scheiben (3, 5) entlang einer axialen Richtung (6) voneinander beabstandet angeordnet sind; wobei die erste Scheibe (3) über ein erstes Blech (7) und die zweite Scheibe (5) über ein zweites Blech (8) mit der Nabe (2) verbunden sind, wobei die Bleche (7, 8) jeweils eine Materialstärke von weniger als 0,9 Millimeter aufweisen, **dadurch gekennzeichnet, dass** an der Nabe (2) ein Anschlagelement (30) angeordnet ist, an dem sich zumindest die Bleche (7, 8) gegenüber der axialen Richtung (6) abstützen.

2. Mehrscheibenkupplungsscheibe (1) nach Anspruch 1, wobei die Bleche (7, 8) jeweils axialfest an der Nabe (2) angeordnet sind.

3. Mehrscheibenkupplungsscheibe (1) nach einem der vorhergehenden Ansprüche, wobei die Scheiben (3, 5) ausgehend von einer Ausgangsstellung (9) nur in einer axialen Richtung (6) eine elastische Verschiebbarkeit (10) aufweisen, wobei die erste Scheibe (3) weiter in der axialen Richtung (6) verschiebbar ist als die zweite Scheibe (5).

4. Mehrscheibenkupplungsscheibe (1) nach einem der vorhergehenden Ansprüche, wobei die Bleche (7, 8) eben ausgeführt sind.

5. Mehrscheibenkupplungsscheibe (1) nach einem der vorhergehenden Ansprüche, wobei eine der Scheiben (3, 5) über einen topfförmigen Abschnitt (11) mit dem Blech (7, 8) verbunden ist.

6. Mehrscheibenkupplungsscheibe (1) nach Anspruch 5, wobei der topfförmige Abschnitt (11) Aussparungen (12) aufweist, in die sich das mit der anderen Scheibe (5, 3) verbundene Blech (7, 8) im Betrieb der Mehrscheibenkupplungsscheibe (1) hinein erstrecken kann, so dass das Blech (7, 8) mit dem Abschnitt (11) eine Überdeckung (13) gegenüber der axialen Richtung (6) bildet.

7. Mehrscheibenkupplungsscheibe (1) nach einem der vorhergehenden Ansprüche, wobei das Anschlagelement (30) eine Materialstärke von mindestens 1,4 Millimetern aufweist.

8. Mehrscheibenkupplungsscheibe (1) nach einem der vorhergehenden Ansprüche, wobei das Anschlagelement (30) mit einer Vorspannung montiert ist, so dass die Bleche (7, 8) gegenüber der axialen Richtung (6) vorgespannt sind.

9. Mehrscheibenkupplungsscheibe (1) nach einem der vorhergehenden Ansprüche, wobei ein über die Scheiben (3, 5) übertragbares Drehmoment vollständig durch die Bleche (7, 8) übertragbar ist.

## Claims

1. A multi-disc clutch disc (1), at least comprising a hub (2) and a first disc (3) for the arrangement of friction linings (4) and a second disc (5) for the arrangement of friction linings (4), wherein the friction linings (4) of the different discs (3, 5) are arranged at a distance from one another in an axial direction (6); wherein the first disc (3) is connected via a first metal sheet (7) and the second disc (5) is connected via a second metal sheet (8) to the hub (2), wherein the metal sheets (7, 8) each have a material thickness of less than 0.9 millimetres, **characterized in that** a stop element (30) is arranged on the hub (2), on which stop element at least the metal sheets (7, 8) are supported in relation to the axial direction (6).

2. The multi-disc clutch disc (1) according to claim 1, wherein the metal sheets (7, 8) are each arranged axially fixed to the hub (2).

3. The multi-disc clutch disc (1) according to any one of the preceding claims, wherein the discs (3, 5) have an elastic displaceability (10) starting from an initial position (9) only in an axial direction (6), wherein the first disc (3) is displaceable further in the axial direction (6) than the second disc (5).

4. The multi-disc clutch disc (1) according to any one of the preceding claims, wherein the metal sheets (7, 8) are designed to be flat.

5. The multi-disc clutch disc (1) according to any one of the preceding claims, wherein one of the discs (3, 5) is connected to the metal sheet (7, 8) via a pot-shaped section (11).

6. The multi-disc clutch disc (1) according to claim 5, wherein the pot-shaped section (11) has recesses (12) into which the metal sheet (7, 8) connected to the other disc (5, 3) can extend during operation of the multi-disc clutch disc (1), such that the metal sheet (7, 8) forms an overlap (13) with the section (11) with respect to the axial direction (6).

7. The multi-disc clutch disc (1) according to any one of the preceding claims, wherein the stop element (30) has a material thickness of at least 1.4 millimetres.

8. The multi-disc clutch disc (1) according to any one of the preceding claims, wherein the stop element (30) is mounted with a preload, such that the metal sheets (7, 8) are preloaded with respect to the axial direction (6).

9. The multi-disc clutch disc (1) according to any one of the preceding claims, wherein a torque transmittable via the discs (3, 5) is completely transmittable through the metal sheets (7, 8).

## Revendications

1. Disque d'embrayage à disques multiples (1), comprenant au moins un moyeu (2) et un premier disque (3) pour disposer les garnitures de friction (4) et un deuxième disque (5) pour disposer les garnitures de friction (4), les garnitures de friction (4) des différents disques (3, 5) étant disposées espacées les unes des autres le long d'une direction axiale (6) ; le premier disque (3) étant relié au moyeu (2) par l'intermédiaire d'une première tôle (7) et le deuxième disque (5) par l'intermédiaire d'une deuxième tôle (8), les tôles (7, 8) ayant chacune une épaisseur de matériau inférieure à 0,9 millimètre, **caractérisé en ce qu'**un élément de butée (30) est disposé sur le moyeu (2), sur lequel au moins les tôles (7, 8) s'appuient par rapport à la direction axiale (6).

2. Disque d'embrayage à disques multiples (1) selon la revendication 1, dans lequel les tôles (7, 8) sont respectivement disposées axialement fixées sur le moyeu (2).

3. Disque d'embrayage à disques multiples (1) selon l'une des revendications précédentes, dans lequel les disques (3, 5) présentent une capacité de déplacement élastique (10) uniquement dans une direction axiale (6) à partir d'une position de départ (9), le premier disque (3) pouvant être déplacé plus loin dans la direction axiale (6) que le deuxième disque (5).

4. Disque d'embrayage à disques multiples (1) selon l'une des revendications précédentes, dans lequel les tôles (7, 8) sont réalisées plates.

5. Disque d'embrayage à disques multiples (1) selon l'une des revendications précédentes, dans lequel l'un des disques (3, 5) est relié à la tôle (7, 8) par l'intermédiaire d'une section (11) en forme de pot.

6. Disque d'embrayage à disques multiples (1) selon la revendication 5, dans lequel la section (11) en forme de pot présente des évidements (12) dans lesquels peut s'étendre la tôle (7, 8) reliée à l'autre disque (5, 3) pendant le fonctionnement du disque d'embrayage à disques multiples (1), de sorte que la tôle (7, 8) forme un chevauchement (13) avec la section (11) par rapport à la direction axiale (6).

7. Disque d'embrayage à disques multiples (1) selon l'une des revendications précédentes, dans lequel l'élément de butée (30) présente une épaisseur de matériau d'au moins 1,4 millimètre.

8. Disque d'embrayage à disques multiples (1) selon l'une des revendications précédentes, dans lequel l'élément de butée (30) est monté avec une précontrainte de telle sorte que les tôles (7, 8) sont précontraintes par rapport à la direction axiale (6).

9. Disque d'embrayage à disques multiples (1) selon l'une des revendications précédentes, dans lequel un couple transmissible par l'intermédiaire des disques (3, 5) peut être entièrement transmis par les tôles (7, 8).
